# EUROPÄISCHE PATENTSCHRIFT

(11) **EP 3 529 002 B1**
(45) Veröffentlichungstag und Bekanntmachung des Hinweises auf die Patenterteilung: **22.03.2023**
(21) Anmeldenummer: 17783530.3
(22) Anmeldetag: 17.10.2017
(51) Int. Cl.: B23Q 11/00, B23Q 17/00, B25D 17/20, B25D 16/00

(54) **STEUERUNGSVERFAHREN UND STAUBABSAUGMODUL**
CONTROL METHOD AND DUST EXTRACTION MODULE
PROCÉDÉ DE COMMANDE ET MODULE D'ASPIRATEUR

(30) Priorität: 20.10.2016 EP 16194714
(43) Veröffentlichungstag der Anmeldung: 28.08.2019
(73) Patentinhaber: Hilti Aktiengesellschaft, 9494 Schaan (LI)
(72) Erfinder: HARTMANN, Markus, 87665 Mauerstetten (DE); BOHN, Klaus-Peter, 9486 Schaanwald (LI); PLÜMACHER, Bastian, 86830 Schwabmünchen (DE); HAMMERS, Thilo, 82269 Geltendorf (DE); BRUNNER, Michael, 86862 Lamerdingen (DE)
(74) Vertreter: Hilti Aktiengesellschaft Corporate Intellectual Property
(86) Internationale Anmeldenummer: PCT/EP2017/076425
(87) Internationale Veröffentlichungsnummer: WO 2018/073214

(56) Entgegenhaltungen:
- DE-A1-102012 221 068
- DE-A1-102013 212 022
- US-B1- 6 216 800

## Beschreibung

### GEBIET DER ERFINDUNG

Die vorliegende Erfindung betrifft ein Steuerungsverfahren eines Staubabsaugmoduls für eine meißelnde Handwerkzeugmaschine gemäß dem Oberbegriff des Anspruchs 1, ein Steuerungsverfahren für eine meißelnde Handwerkzeugmaschine gemäß dem Oberbegriff des Anspruchs 7 sowie ein Staubabsaugmodul für eine meißelnde Handwerkzeugmaschine gemäß dem Oberbegriff des Anspruchs 10. Solche Verfahren und ein solches Staubabsaugmodul sind aus DE 10 2012 221068 A1 bekannt.

US 9,132,572 beschreibt einen Bohrhammer mit einem Staubabsaugmodul. Der Bohrhammer hat ein pneumatisches Schlagwerk, das periodisch Schläge auf einen Bohrer ausübt. Der Bohrer wird ferner um seine Längsachse gedreht. Der Bohrhammer wird insbesondere eingesetzt um Bohrlöcher in mineralische Baumaterialien, wie z.B. Beton, zu bohren. Die verwendeten Bohrer sind daher für die Bearbeitung von mineralischen Bauwerkstoffen optimiert. Das Staubabsaugmodul entfernt das anfallende Bohrmehl unmittelbar an dem Bohrloch, um die Arbeitsumgebung für den Anwender staubarm zu halten. Typischerweise sind Betonstrukturen mit Armierungseisen versehen, welche der meißelnde Bohrer nur vergleichsweise langsam durchtrennt.

US 6,640,205 beschreibt einen Bohrhammer, der während des Abbaus eines Untergrunds rücklaufende Stoßwellen in dem Bohrer untersucht. Basierend auf den Stoßwellen wird eine Materialzusammensetzung des Untergrunds ermittelt.

### OFFENBARUNG DER ERFINDUNG

Das erfindungsgemäße Steuerungsverfahren eines Staubabsaugmoduls für eine meißelnde Handwerkzeugmaschine gemäß dem Anspruch 1 hat die Schritte: Ansaugen eines Luftstroms von einer durch das Werkzeug bearbeiteten Stelle eines Untergrunds mittels eines Lüfters des Staubabsaugmoduls, Ermitteln eines Materials an der von dem Werkzeug bearbeiteten Stelle durch einen Materialdetektor und Anpassen einer Saugleistung des Staubabsaugmoduls in Abhängigkeit des ermittelten Materials zum Einstellen des Luftstroms. Bei einem eisenfreien, mineralischen Material ist der Luftstrom größer oder gleich einem Nennwert ist und bei einem eisenhaltigen Material ist der Luftstrom geringer als der Nennwert.

Ein Steuerungsverfahren für eine meißelnde Handwerkzeugmaschine mit einem Staubabsaugmodul gemäß dem Anspruch 7 sieht die Schritte vor: periodisches Ausüben von Schlägen auf ein in einem Werkzeughalter der Handwerkzeugmaschine gehaltertes Werkzeug zum Bearbeiten einer Stelle eines Untergrunds ; Absaugen eines Luftstroms von der durch das Werkzeug bearbeiteten Stelle des Untergrunds mittels eines Lüfters des Staubabsaugmoduls; Ermitteln eines Materials an der von dem Werkzeug bearbeiteten Stelle durch einen Materialdetektor und Anpassen einer Saugleistung des Staubabsaugmodul in Abhängigkeit des ermittelten Materials zum Einstellen des Luftstroms, wobei bei einem hauptsächlich mineralischen Material der Luftstrom größer oder gleich einem Nennwert ist und wobei bei einem eisenhaltigen Material der Luftstrom geringer als der Nennwert ist, wobei bei hauptsächlich mineralischen Material und bei eisenhaltigen Material die Schläge auf das Werkzeug ausgeübt werden.

Das erfindungsgemäße Staubabsaugmodul für eine meißelnde Handwerkzeugmaschine ist durch die Merkmale des Anspruchs 10 definiert.

Das Staubabsaugmodul entfernt im Standardbetrieb das Bohrmehl, das aufgrund der eingeschalteten Handwerkzeugmaschine anfällt. Der Lüfter des Staubabsaugmoduls wird dazu während des Betriebs der Handwerkzeugmaschine eingeschaltet. Das Staubabsaugmodul soll diesen Standardbetrieb beibehalten, wenn mineralisches Material bearbeitet wird. Die Spitze des Werkzeugs trifft auf mineralisches Material. Das Staubabsaugmodul sorgt dann für eine staubarme Arbeitsumgebung und beschleunigt den Bohrfortschritt, indem das Bohrmehl möglichst rasch entfernt wird. Das Staubabsaugmodul soll den Standardbetrieb unterbrechen, wenn eisenhaltiges Material, insbesondere Armierungseisen, bearbeitet wird. Das Staubabsaugmodul soll das Bohrmehl, insbesondere noch verbleibendes mineralisches Bohrmehl, nicht aus dem Bohrloch entfernen. Das Unterbrechen erfolgt unabhängig von der Handwerkzeugmaschine, welche nun mit dem Werkzeug das eisenhaltige Material abbaut. Das Staubabsaugmodul nimmt seinen Standardbetrieb wieder auf, wenn erneut mineralisches Material abgebaut wird.

Der Luftstrom Q bei eisenhaltigem Material ist vorzugsweise höchstens ein Fünftel des Nennwerts.

Eine Ausgestaltung sieht vor, dass der Materialdetektor Vibrationen des Staubabsaugmoduls oder Vibrationen einer Handwerkzeugmaschine, in welcher das meißelnde Werkzeug eingesetzt ist, durch einen Vibrationssensor erfasst und eine Auswertungseinheit basierend auf den Vibrationen das Material ermittelt. Bei einem Meißeln auf Stahlarmierungen erhöhen sich Vibrationen in charakteristischer Weise gegenüber dem Meißeln von Beton. Die Erfassung des Materials M über die Vibrationen ist einfach und robust. Eine Vibration oberhalb eines Schwellwerts wird einem eisenhaltigen Material und eine Vibration unterhalb des Schwellwerts einem hauptsächlich mineralischen Material zugeordnet. Ein Maß für die Vibrationen sind beispielsweise Beschleunigungswerte, Auslenkungen um eine Ruhelage, etc..

Eine Ausgestaltung sieht vor, dass die Auswertungseinheit ein dem Material zugeordnetes Stellsignal an eine Lüftersteuerung des Lüfters übermittelt und die Lüftersteuerung eine Drehzahl des Lüfters ansprechend auf das Stellsignal bei einem eisenhaltigen Material gegenüber einer Drehzahl bei einem hauptsächlich mineralischen Material absenkt.

Eine Ausgestaltung sieht ein Erfassen einer Aktivität einer auf das Werkzeug Schläge ausübenden Handwerkzeugmaschine vor. Ansprechend auf die Aktivität der Handwerkzeugmaschine wird der Luftstrom angesaugt.

Eine Ausgestaltung sieht vor, dass eine Schlagleistung der Handwerkzeugmaschine bei dem eisenhaltigen Material um weniger als 20 % von einer Schlagleistung bei dem hauptsächlich mineralischen Material verschieden ist. Sowohl das mineralische Material M1 als auch das eisenhaltige Material M2 sollen meißelnd bearbeitet werden, entsprechend bleibt das Schlagwerk im Betrieb.

Eine Ausgestaltung sieht vor, dass das Staubabsaugmodul mit dem Beginn des periodischen Ausübens von Schlägen eingeschaltet wird.

Eine Staubabsaugung hat einen Lüfter zum Ansaugen eines Luftstroms von einer durch das Werkzeug bearbeiteten Stelle eines Untergrunds, einen Staubfilter, einen Staubsammelbehälter, einen Materialdetektor zum Ermitteln eines Materials an der von dem Werkzeug bearbeiteten Stelle und eine Lüftersteuerung. Die Lüftersteuerung passt zum Einstellen des Luftstroms eine Saugleistung des Staubabsaugmodul in Abhängigkeit des ermittelten Materials an. Bei einem hauptsächlich mineralischen Material ist der Luftstrom größer oder gleich einem Nennwert ist und bei einem eisenhaltigen Material ist der Luftstrom geringer als der Nennwert ist.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer mit einem Staubabsaugmodul

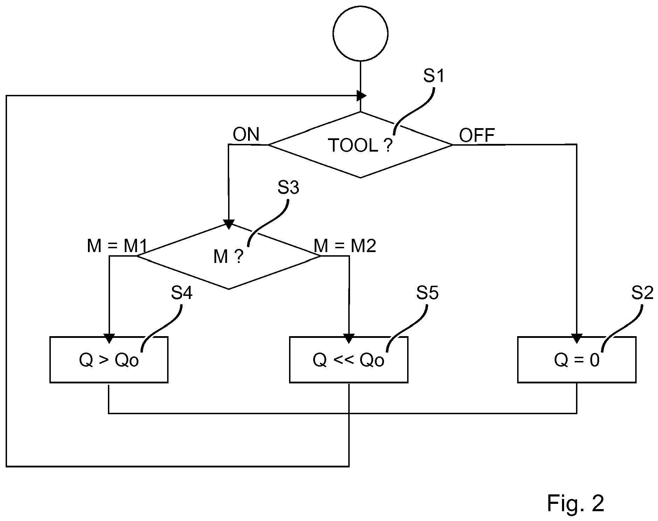

- Fig. 2: ein Steuerungsverfahren für das Staubsaugmodul
- Fig. 3: einen Bohrhammer mit einem Staubabsaugmodul

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

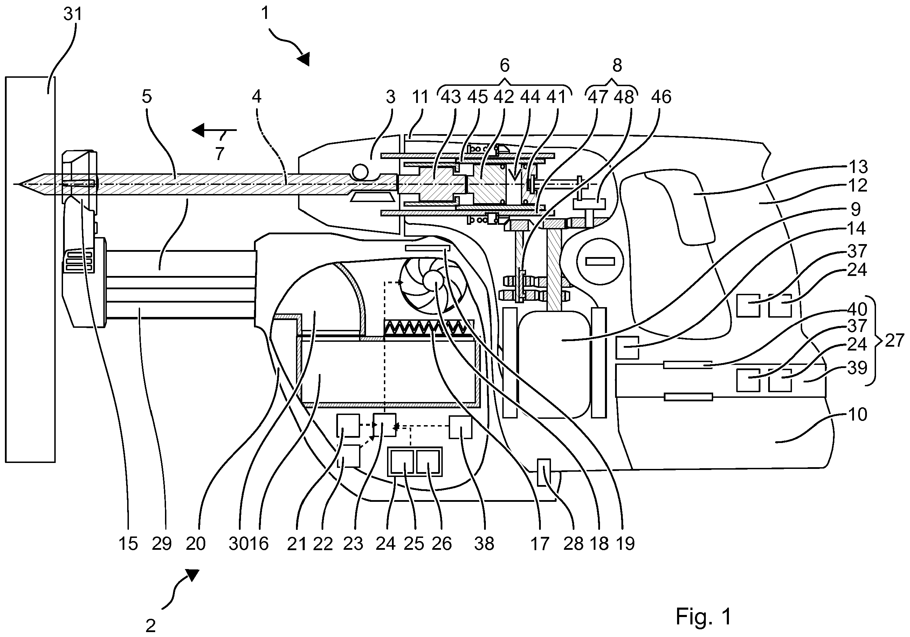

Fig. 1 zeigt schematisch einen Bohrhammer **1** mit einem handgehaltenen Staubabsaugmodul **2** zum Absaugen von anfallendem Bohrgut. Der Bohrhammer 1 ist ein Beispiel für eine schlagende handgehaltene Werkzeugmaschine. Das Staubabsaugmodul **2** wird mittelbar durch die handgehaltene Werkzeugmaschine geführt.

Der Bohrhammer **1** hat einen Werkzeughalter **3,** in welchen koaxial zu einer Arbeitsachse **4** ein Bohrer, Meißel oder anderes schlagendes Werkzeug **5** eingesetzt und verriegelt werden kann. Der Bohrhammer **1** hat ein pneumatisches Schlagwerk **6,** welches periodisch Schläge in einer Schlagrichtung **7** auf der Bohrer **5** ausüben kann. Ein Drehantrieb **8** kann den Werkzeughalter **3** kontinuierlich um die Arbeitsachse **4** drehen. Das pneumatische Schlagwerk **6** und der Drehantrieb sind von einem Elektromotor **9** angetrieben, welcher aus einer Batterie **10** oder einer Netzleitung mit elektrischem Strom gespeist wird.

Das Schlagwerk **6** und der Drehantrieb **8** sind in einem Maschinengehäuse **11** angeordnet. Ein Handgriff **12** ist typischerweise an einer dem Werkzeughalter **3** abgewandten Seite des Maschinengehäuses **11** angeordnet. Der Anwender kann den Bohrhammer **1** mittels des Handgriffs **12** im Betrieb halten und führen. Ein zusätzlicher Hilfsgriff kann nahe dem Werkzeughalter **3** befestigt werden. An oder in der Nähe des Handgriffs **12** ist ein Betriebstaster **13** angeordnet, welchen der Anwender vorzugsweise mit der haltenden Hand betätigen kann. Der Elektromotor **9** wird durch Betätigen des Betriebstasters **13** eingeschaltet. Typischerweise dreht sich der Elektromotor **9** solange, wie der Betriebstaster **13** gedrückt gehalten ist. Der Bohrhammer **1** hat typischerweise eine Leistungsregelung **14,** welche die Schlagleistung des Schlagwerks **6** konstant hält. Die Regelung basiert beispielsweise auf einer Drehzahlregelung des Elektromotors **9.**

Das Staubabsaugmodul **2** hat in Strömungsrichtung aufeinanderfolgend eine Ansaugdüse **15,** einen Staubsammelbehälter **16,** einen Staubfilter **17** und einen Lüfter **18.** Die Ansaugdüse **15** liegt an dem Bohrer **5** an. Der Lüfter **18** erzeugt einen Luftstrom **Q,** der an der Ansaugdüse **15** in das Staubabsaugmodul **2** eintritt. Die eintretende Luft transportiert den Staub von dem Bohrer **5** ab. Die staubbeladene Luft fließt in den Staubsammelbehälter **16.** Der Staub scheidet sich an dem Staubfilter **17** ab, die gereinigte Luft erreicht den Lüfter **18** und tritt in der Nähe des Lüfters **18** durch Öffnungen **19** des Gehäuses **20** aus.

Das Staubabsaugmodul **2** wird vorzugsweise automatisch, unmittelbar oder mittelbar durch den Bohrhammer **1** ein- und ausgeschaltet. Das Staubabsaugmodul **2** ist vorzugsweise inaktiv, wenn der Bohrhammer **1** inaktiv ist (Schritt **S1** TOOL OFF). Der von dem Staubabsaugmodul **2** geförderte Luftstrom ist gleich Null, z.B. weil der Lüfter **18** steht. Das Staubabsaugmodul **2** ist aktiv, wenn der Bohrhammer **1** aktiv ist (Schritt **S1** TOOL ON).

Der Lüfter **18** kann beispielsweise an die Stromversorgung des Bohrhammers **1** angeschlossen sein. Der Betriebstaster **13** des Bohrhammers **1** verbindet synchron die Stromversorgung für den Elektromotor **9** und den Lüfter **18.** Das Ausschalten kann ebenfalls synchron erfolgen. In einer Alternative wird der Lüfter **18** mit einer Verzögerung von mehreren Sekunden nach dem Elektromotor **9** ausgeschaltet Schritt **S2.**

Der Lüfter **18** kann mittelbar durch den Betriebstaster **13** eingeschaltet und/oder ausgeschaltet werden. Beispielsweise hat das Staubabsaugmodul **2** einen Sensor **21** zum Erkennen einer Leistungsaufnahme des Bohrhammers 1, z.B. ein Amperemeter, einen Sensor **22** zum Erkennen von den elektromagnetischen Wechselfeldern des Elektromotors **9,** etc.. Ein mittelbares Einschalten ist insbesondere von Staubabsaugmodulen **2** mit einer unabhängigen Stromversorgung vorteilhaft. Das Staubabsaugmodul **2** kann manuell durch den Anwender in einen Wartezustand versetzt werden, aus dem es durch den Betriebstaster **13** aufgeweckt wird.

Eine Lüftersteuerung **23** steuert den Lüfter **18.** Die Lüftersteuerung **23** kann ungeregelt, d.h. ohne Feedback, ausgebildet sein. Die Drehzahl des Lüfters **18** bzw. der Luftstrom in dem Staubabsaugmodul **2** sind durch die Lastgrenze des Lüfters **18** oder der Stromversorgung vorgegeben. Die Lüftersteuerung **23** kann geregelt sein. Der Luftstrom **Q,** die Drehzahl oder ein Druck in dem Staubabsaugmodul **2** können auf eine Soll-Größe ausgeregelt werden, beispielsweise indem die Leistungsaufnahme des Lüfters **18** angepasst wird. Oder die Drehzahl wird beispielsweise so geregelt, dass ein konstanter Luftstrom **Q** in die Ansaugdüse **15** gewährleistet ist. Beispielsweise wird die Drehzahl oder die Leistungsaufnahme des Lüfters **18** erhöht, wenn eine erhöhte Staubmenge in der angesaugten Luft festgestellt wird. Beispielsweise kann die Drehzahl auch in Abhängigkeit des Füllstands in dem Staubsammelbehälter **16,** dem Druck in der Ansaugdüse **15,** dem Druck in der Umgebung des Lüfters **18,** etc. angepasst werden.

Ein Materialdetektor **24** prüft fortlaufend oder periodisch, welches Material **M** der Bohrer **5** bearbeitet Schritt **S3.** Das Staubabsaugmodul **2** führt einen (Standard-) Betrieb aus, wenn das Material ein mineralisches Material **M1** ist, z.B. Beton, Ziegel, Naturstein. Der Lüfter **18** fördert einen ausreichenden Luftstrom **Q** zum Abtransport von Bohrgut Schritt **S4.** Eine Drehzahl, geregelt oder ungeregelt, des Lüfters **18** ist gleich oder größer einem Nennwert. Der Luftstrom **Q** ist entsprechend größer als ein Nennwert **Qo.** Der Nennwert **Qo** liegt beispielsweise im Bereich zwischen 4 l/s (Liter pro Sekunde) bis 10 l/s. Das Staubabsaugmodul **2** unterbricht den Betrieb, wenn der Bohrer **5** ein metallisches Material **M2** bearbeitet, z.B. ein Armierungseisen. Während der Unterbrechung des Betriebs wird der Luftstrom **Q** wenigstens soweit reduziert, dass im Wesentlichen kein Bohrgut aus dem Bohrloch gefördert wird Schritt **S5.** Beispielsweise wird die Stromversorgung zu dem Lüfter **18** unterbrochen. Der Lüfter **18** kann auch abgebremst werden, z.B. durch Rekuperation oder durch eine Widerstandsbremse. Alternativ kann ein Nennwert für den Luftstrom **Q** oder die Drehzahl auf weniger als ein Fünftel des Nennwerts **Qo** im Betrieb, z.B. Null, eingestellt werden. Die Saugleistung kann alternativ oder ergänzend durch einen Bypass reduziert werden. Beispielsweise wird eine Lüftungsklappe nahe dem Lüfter 18bz geöffnet. Der Luftstrom Qbz an der Ansaugdüse 15bz wird dadurch reduziert. Ferner kann der Luftstrom Qbz zwischen der Ansaugdüse 15bz und dem Lüfter 18bz durch eine Drossel oder ein Sperrventil zum Reduzieren der Saugleistung reduziert werden. Der Standardbetrieb wird vorzugsweise automatisch wieder aufgenommen, wenn das Armierungseisen durchtrennt und der Bohrer **5** wieder mineralisches Material bearbeitet.

Der Bohrhammer **1** baut das mineralische Material **M1** und das eisenhaltige Material **M2** im Wesentlichen in gleicher Weise ab. Die Schlagleistung des Schlagwerks **6** ist bei erkannten mineralischen Material **M1** und erkannten eisenhaltigen Material **M2** gleich. Gegebenenfalls kann aufgrund der unterschiedlichen Belastungen des Bohrhammers **1** bei den unterschiedlichen Materialien die Schlagleistung bei eisenhaltigen Material **M2** etwas abgesenkt werden, z.B. um bis zu 20 % gegenüber der Schlagleistung bei mineralischem Material **M1** abgesenkt werden. In einer Variante kann die Drehzahl des Drehantriebs bei eisenhaltigem Material **M2** geringer als eine Drehzahl bei mineralischen Material **M1** sein.

Das Prüfen des Materials **M** erfolgt mit einem Materialdetektor **24.** Der Materialdetektor **24** kann die in dem Werkzeug **5** rücklaufende Stoßwelle auswerten, wie z.B. in US 6,640,205 beschrieben. Ein anderer beispielhafter Materialdetektor **24** beinhaltet einen Vibrationssensor **25** zum Erfassen von Vibrationen und eine Auswertungseinheit **26.** Der Bohrer **5** erfährt beim schlagenden Bearbeiten von mineralischem Material und eisenhaltigem Material unterschiedliche rückwirkende Kräfte. Die Vibrationen in dem Bohrhammer **1** sind bei einem eisenhaltigen Material deutlich höher als bei Gestein oder sonstigen mineralischen Materialien **M1.**

Der Vibrationssensor **25** steht über eine Schallbrücke mit dem Bohrer **5** in Kontakt. Der Vibrationssensor **25** kann beispielsweise in dem Staubabsaugmodul **2,** in dem Bohrhammer **1** oder einer dritten Einheit **27** angeordnet sein. Die Schallbrücke erfolgt durch eine mechanische Verbindung über ein oder mehrere steife Elemente, wie z.B. durch den Werkzeughalter **3,** das Schlagwerk **6,** das Maschinengehäuse **11,** die Gehäuse **20** und die Ansaugdüse **15.**

Der Vibrationssensor **25** hat beispielsweise einen freischwingenden Arm, auf dem ein piezoelektrischer Polymerfilm aufgebracht ist. Der Arm erzeugt angeregt durch die Vibrationen ein elektrisches Signal, welches der Vibrationssensor **25** auswertet. Der Vibrationssensor **25** kann ein Beschleunigungssensor sein, welche als Maß für Vibrationen Beschleunigungswerte ausgibt. Der Vibrationssensor **25** kann ebenso ein Mikrophon sein, vorzugsweise zum Erfassen von Geräuschen im Infraschall.

Die Auswertungseinheit **26** vergleicht die von dem Vibrationssensor **25** erfassten Vibrationen beispielsweise mit einem Schwellwert. Ein Unterschreiten des Schwellwerts wird einem Bohren von mineralischem Material **M1** zugeordnet und ein Überschreiten des Schwellwerts wird einem Bohren von eisenhaltigem Material **M2** zugeordnet. Der Schwellwert ist durch Versuchsreihen ermittelbar. Der Schwellwert kann in der Auswertungseinheit **26** hinterlegt sein. Anstelle des Vergleichs mit einem einzelnen Schwellwert kann anhand eines komplexeren Fingerabdrucks das Bohren von Gestein von dem Bohren von eisenhaltigem Material diskriminiert werden. Die Vibrationen können in ein oder mehreren Frequenzbändern ermittelt und mit jeweiligen Schwellwerten verglichen werden. Ein Frequenzband hat beispielsweise die Schlagzahl als Zentralfrequenz und beispielsweise eine Bandbreite von maximal der Hälfte der Schlagzahl.

Das Staubabsaugmodul **2** ist beispielsweise an dem Bohrhammer **1** aufgehängt (Fig. 1). Das Staubabsaugmodul **2** hat ein eigenes abgeschlossenes Gehäuse **20.** Das Gehäuse **20** kann beispielsweise an dem Maschinengehäuse **11** des Bohrhammer **1** angelegt und über eine Klinke **28** mit dem Maschinengehäuse **11** verrastet werden. Die Klinke **28** kann von dem Anwender per Hand gelöst werden und das Staubabsaugmodul **2** kann von dem Bohrhammer **1** abgenommen werden. Anstelle oder in Ergänzung zu der Klinke **28** sind vielfältige andere Befestigungsmöglichkeiten bekannt, u.A. Schwalbenschwanzführungen, Schieber, federbelastete Zapfen. Anstelle eines abnehmbaren Staubabsaugmoduls **2** kann das Staubabsaugmodul **2** auch dauerhaft mit der Handwerkzeugmaschine verbunden oder in der Handwerkzeugmaschine integriert sein. Der Anwender kann den Bohrhammer **1** und das Staubabsaugmodul **2** mittels des Handgriffs **12** des Bohrhammers **1** während des Betriebs halten und führen.

Die beispielhafte Ansaugdüse **15** ist ringförmig ausgestaltet und umschließt den Bohrer **5.** Das Gehäuse **20** des Staubabsaugmoduls **2** ist so bemessen, dass die Ansaugdüse **15** konzentrisch zu der Arbeitsachse **4** des Bohrhammer **1** ist. Die Ansaugdüse **15** ist über einen in einem Teleskop **29** geführten Kanal **30** mit dem Staubsammelbehälter **16** verbunden. Das Teleskop **29** ist vorzugsweise in Schlagrichtung **7** vorgespannt, wodurch die Ansaugdüse **15** sich selbsttätig an dem Untergrund **31** anlegt. Die Ansaugdüse **15** saugt vorteilhafterweise den Staub unmittelbar an dem Bohrloch ab.

Der Vibrationssensor **25** ist beispielsweise starr mit dem Gehäuse **20** verbunden, welches an dem Bohrhammer **1** befestigt ist. Die Vibrationen des Bohrers **5** übertragen sich über den Werkzeughalter **3** und das Schlagwerk **6** auf den Bohrhammer **1.** Die Klinke **28** oder das an dem Bohrhammer **1** anliegende Gehäuse **20** bilden eine Schallbrücke ausreichender Qualität, um die Vibrationen des Bohrers **5** mittelbar in dem Staubabsaugmodul **2** messen zu können.

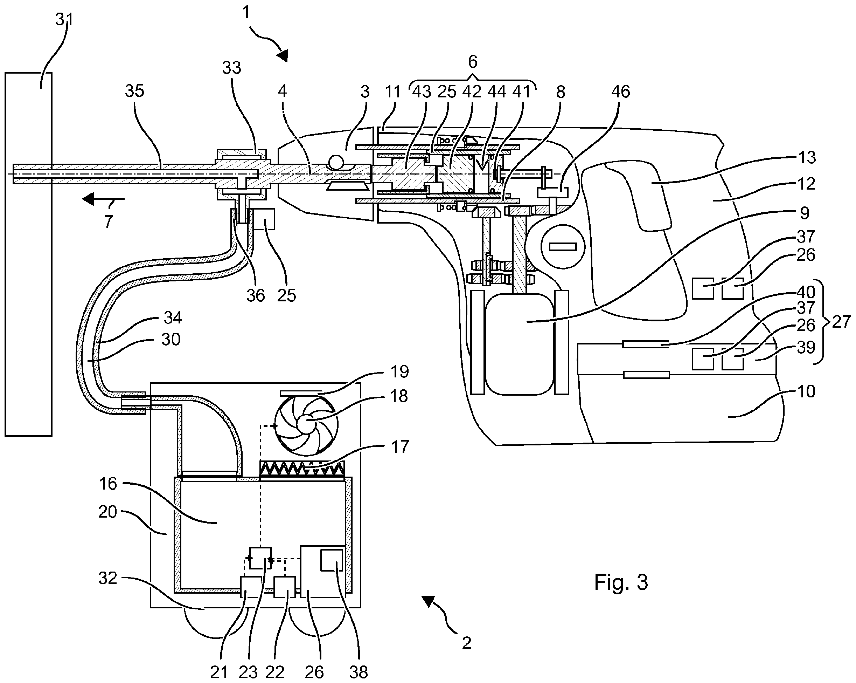

Fig. 3 zeigt den Bohrhammer **1** mit einem nicht-handgehaltenen Staubabsaugmodul **2.** Das Gehäuse **20** des Staubabsaugmoduls **2** steht unabhängig von der Handwerkzeugmaschine **1** während des Betriebs auf dem Boden. Das beispielhafte Staubabsaugmodul **2** hat Räder **32** an seinem Gehäuse **20.** Innerhalb des Gehäuses **20** sind der Staubsammelbehälter **16,** der Staubfilter **17** und der Lüfter **18.**

Die beispielhafte Ansaugdüse **33** ist auf den Bohrer **5** aufgesteckt. Die Ansaugdüse **15** wird mittelbar durch den Bohrhammer **1** von dem Anwender gehalten und geführt. Die Ansaugdüse **15** ist über einen flexiblen Schlauch **34** mit dem Staubsammelbehälter **16** verbunden. In dem Schlauch **34** verläuft der Kanal **30.**

Die beispielhafte Ansaugdüse **33** ist fest mit dem Bohrer **5** verbunden. Die Ansaugdüse **33** ist speziell für Saugbohrer **35** ausgebildet. Saugbohrer **35** haben keine Transportwendel, sondern einen oder zwei innerhalb des Schafts bis zum Bohrkopf verlaufende Absaugkanäle. Nahe ihres Einsteckendes haben die Saugbohrer **35** einen radialen Durchstich, an welchen die Ansaugdüse **33** angeschlossen werden kann. Die Ansaugdüse **15** ist gegenüber dem Bohrer **5** drehbar, typischerweise aber längs der Arbeitsachse **4** fixiert. Der Schlauch **34** hat ein Aufsteckende **36,** welches an der Ansaugdüse **33** ohne Werkzeug **5** lösbar befestigt ist.

Der Vibrationssensor **25** des Materialdetektors **24** kann an der Ansaugdüse **15** oder vorteilhaft an dem Aufsteckende **36** befestigt sein. Die Vibrationen des Bohrers **5** übertragen sich auf die Ansaugdüse **15** und das Aufsteckende **36.** Die Messsignale des Vibrationssensors **25** können über eine Signalleitung in dem Schlauch **34** oder drahtlos an die Auswertungseinheit **26** übermittelt werden.

Der Vibrationssensor **25** kann für das Einschalten des Staubabsaugmoduls **2** verwendet werden. Die Auswertungseinheit **26** vergleicht die Vibrationen mit einer Untergrenze. Die Untergrenze ist so gering gewählt, dass diese mit einem ausgeschalten Bohrhammer **1** korreliert. Liegen die Vibrationen unterhalb der Untergrenze, deaktiviert die Auswertungseinheit **26** das Staubabsaugmodul **2,** z.B. gemäß Schritt **S2.** Überschreiten die erfassten Vibrationen die Untergrenze, interpretiert die Auswertungseinheit **26** dies als eingeschalteten Bohrhammer **1** (Schritt **S1,** TOOL ON). Der Schwellwert zum Unterscheiden zwischen einem Bearbeiten von mineralischen Material **M1** und eisenhaltigen Material **M2** ist deutlich höher als die Untergrenze. Der Schwellwert kann für unterschiedliche Leistungsklassen der Bohrhämmer **1** in Versuchsreihen ermittelt werden. In einer Weiterentwicklung kann der Schwellwert für verschiedene Werkzeuge ermittelt werden. Der Bohrhammer **1** kann beispielsweise ein eingesetztes Werkzeug **3** mittels eines Sensors erkennen und den Schwellwert entsprechend dem Werkzeug **3** festlegen. Eine Weiterentwicklung berücksichtigt den unterschiedlichen Klang beim Meißeln von Beton und Stahl. Eine Variante berücksichtigt für den Vergleich mit dem Schwellwert nur Anteil der Vibrationen innerhalb eines Frequenzbereichs. Beispielsweise in einem Frequenzbereich zwischen 200 Hz und 2 kHz, welcher dem höheren Klang eines Schlags von Metall auf Metall zugeordnet werden kann. Eine andere Variante vergleicht einen niederfrequenten Anteil mit einem hochfrequenten Anteil. Die Auswertungseinheit **26** vergleicht die mittlere Amplitude des niederfrequenten Anteils mit der mittleren Amplitude des hochfrequenten Anteils. Ein relativer Anstieg des hochfrequenten Anteils gegenüber dem niederfrequenten Anteil deutet auf die Bearbeitung von eisenhaltigem Material hin. Die Auswertungseinheit **26** vergleicht den relativen Anteil mit einem geeigneten Schwellwert. Die Auswertungseinheit **26** kann die Signalstärke in den Frequenzbereichen beispielsweise durch eine Fourier Analyse ermitteln oder durch analoge Filter bestimmen.

Für den Aufbau und die Funktionsweise der Auswertungseinheit **26** wird auf die Beschreibung zu der Ausführungsform von Fig. 1 verwiesen.

Der Materialdetektor **24,** z.B. die Auswertungseinheit **26** und der Vibrationssensor **25,** können in dem Staubabsaugmodul **2** oder in der Handwerkzeugmaschine **1** oder in einer dritten Einheit **27** angeordnet sein. Das Ermitteln ob der Bohrer **5** mineralisches oder eisenhaltiges Material bearbeitet, kann durch das Staubabsaugmodul **2,** den Bohrhammer **1** oder eine dritte Einheit **27** erfolgen.

Der Bohrhammer **1** oder die dritte Einheit **27** enthalten den Materialdetektor **24** mit der Auswertungseinheit **26** und dem Vibrationssensor **25.** Der Materialdetektor **24** ist an einen Sender **37** gekoppelt, welche das Auswertungsergebnis des Materialdetektors **24** in einer Botschaft übermittelt. Die Botschaft enthält, ob der Bohrer **5** aktuell mineralisches Material **M1** oder eisenbasiertes Material **M2** bearbeitet. Der Sender **37** kann drahtlos oder drahtgebunden sein. Die Lüftersteuerung **23** des Staubabsaugmoduls **2** hat eine Kommunikationsschnittstelle **38** zum Empfangen der Botschaften. Die Kommunikationsschnittstelle **38** ist entsprechend drahtlos oder drahtgebunden. Die Lüftersteuerung **23** kann den Standardbetrieb des Staubabsaugmoduls **2** unterbrechen, wenn die Botschaft eine Bearbeitung von eisenhaltigem Material **M2** anzeigt. Die Lüftersteuerung **23** beendet die Unterbrechung, d.h. das Staubabsaugmodul **2** nimmt seinen Betrieb wieder auf, wenn die Botschaft eine Bearbeitung von mineralischem Material **M1** anzeigt.

Die dritte Einheit **27** kann beispielsweise ein von dem Bohrhammer **1** und dem Staubabsaugmodul **2** separates Gehäuse **39** aufweisen. Die dritte Einheit **27** kann an dem Bohrhammer **1** befestigt werden. Beispielsweise kann die dritte Einheit als Einschub zwischen der Batterie **10** und dem Bohrhammer **1** angeordnet werden. Die dritte Einheit **27** hat an ihren gegenüberliegenden Gehäuseseiten dem Bohrhammer **1** und der Batterie **10** entsprechende elektromechanischen Schnittstellen **40.**

Das pneumatische Schlagwerk **6** hat längs der Schlagrichtung **7** einen Erreger **41,** einen Schläger **42** und einen Döpper **43.** Der Erreger **41** wird mittels des Elektromotors **9** zu einer periodischen Bewegung längs der Arbeitsachse **4** gezwungen. Der Erreger **41** ist über eine Getriebekomponente **41** zum Umsetzen der Drehbewegung des Elektromotors **9** in einer periodische, translatorische Bewegung entlang der Arbeitsachse **4** angebunden. Eine beispielhafte Getriebekomponente beinhaltet ein Exzenterrad oder eine Taumelscheibe. Eine Periode der translatorischen Bewegung des Erregers **41** ist durch die Drehzahl des Elektromotors **9** und ggf. ein Untersetzungsverhältnis in der Getriebekomponente vorgeben.

Der Schläger **42** koppelt über eine Luftfeder an die Bewegung des Erregers **41** an. Die Luftfeder ist durch eine zwischen dem Erreger **41** und dem Schläger **42** abgeschlossene pneumatische Kammer **44** gebildet. Der Schläger **42** bewegt sich in die Schlagrichtung **7** bis der Schläger **42** auf den Döpper **43** aufschlägt. Der Döpper **43** liegt in der Schlagrichtung **7** an dem Bohrer **5** an und überträgt den Schlag auf der Bohrer **5.** Die Periode der Bewegung des Schlägers ist identisch zu der Periode der Bewegung des Erregers **41.** Der Schläger **42** schlägt somit mit einer Schlagzahl, die gleich dem Inversen der Periode ist. Das Wirkprinzip der Luftfeder setzt enge Grenzen für die Periode bzw. die Schlagzahl, da die Effizienz der pneumatischen Kopplung auf eine im Wesentlichen resonante Anregung angewiesen ist. Bei einer Abweichung von mehr als 20 % von einer optimalen Schlagzahl folgt der Schläger **42** typischerweise nicht mehr der Bewegung des Erregers **41.** Die optimale Schlagzahl ist durch die Masse des Schlägers **42** und die geometrischen Abmessungen der pneumatischen Kammer **44** vorgegeben. Eine optimale Schlagzahl liegt im Bereich zwischen 25 Hz und 100 Hz.

Das beispielhafte Schlagwerk **6** hat einen kolbenförmigen Erreger **41** und einen kolbenförmigen Schläger **42,** die durch ein Führungsrohr **45** längs der Arbeitsachse **4** geführt sind. Der Erreger **41** und der Schläger **42** liegen mit ihren Mantelflächen an der Innenfläche des Führungsrohrs **45** an. Die pneumatische Kammer **44** ist durch den Erreger **41** und den Schläger **42** längs der Arbeitsachse **4** und durch das Führungsrohr **45** in radialer Richtung abgeschlossen. Dichtungsringe in den Mantelflächen von Erreger **41** und Schläger **42** können den luftdichten Abschluss der pneumatischen Kammer **44** verbessern. Der Erreger **41** wird durch den Elektromotor **9** angetrieben. Ein Exzenterrad **46** oder ein anderer Umsetzer setzt die Drehbewegung des Elektromotor **9** in die periodische Translationsbewegung des Erregers **41** um. Das Exzenterrad **46** ist mit dem Elektromotor **9** verbunden.

Der Drehantrieb **8** beinhaltet die Spindel **47,** welche koaxial zu der Arbeitsachse **4** angeordnet ist. Die Spindel **47** ist beispielsweise hohl, und das Schlagwerk **6** ist innerhalb der Spindel angeordnet. Der Werkzeughalter **3** ist auf der Spindel **47** aufgesetzt. Der Werkzeughalter **3** kann über einen Verschlussmechanismus lösbar oder dauerhaft mit der Spindel **47** verbunden sein. Die Spindel **47** ist über ein untersetzendes Getriebe **48** an den Elektromotor **9** angebunden. Die Drehzahl der Spindel **47** ist geringer als die Drehzahl des Elektromotors **9.** Zwischen das untersetzende Getriebe **48** und die Spindel **47** kann eine Rutschkupplung geschaltet sein. Die Spindel **47** dreht sich vorzugsweise kontinuierlich mit einer vorgegebenen Drehzahl. Die Drehzahl der Spindel **47** liegt im Bereich zwischen 200 Umdrehungen pro Minute (U/min) und 1000 U/min und die Spindel **47** dreht rechtshändig. Mit der Schlagzahl des pneumatischen Schlagwerks **6** dreht sich zwischen zwei aufeinanderfolgenden Schlägen der Bohrers **5** um einen Umsetzwinkel von mehr als 30 Grad, z.B. mehr als 30 Grad, höchstens 75 Grad. Der typische Umsetzwinkel bewirkt einen effizienten Abtransport von Bohrgut aus dem Bohrloch mit den herkömmlichen Bohrern **5.**

## Patentansprüche

1. Steuerungsverfahren eines Staubabsaugmoduls (2) für eine meißelnde Handwerkzeugmaschine (1), in welcher ein meißelndes Werkzeug (5) eingesetzt ist, mit den Schritten:
Ansaugen eines Luftstroms (Q) von einer durch das Werkzeug (5) bearbeiteten Stelle eines Untergrunds (31) mittels eines Lüfters (18) des Staubabsaugmoduls (2),
**gekennzeichnet durch**
Ermitteln eines Materials (M) an der von dem Werkzeug (5) bearbeiteten Stelle durch einen Materialdetektor (24) und
Anpassen einer Saugleistung des Staubabsaugmodul (2) in Abhängigkeit des ermittelten Materials (M) zum Einstellen des Luftstroms (Q), wobei bei einem eisenfreien, mineralischen Material (M1) der Luftstrom (Q) größer oder gleich einem Nennwert (Qo) ist und wobei bei einem eisenhaltigen Material (M2) der Luftstrom (Q) geringer als der Nennwert (Qo) ist.

2. Steuerungsverfahren nach Anspruch 1, **dadurch gekennzeichnet, dass** der Luftstrom (Q) bei eisenhaltigen Material (M2) höchstens ein Fünftel des Nennwerts (Qo) ist.

3. Steuerungsverfahren nach Anspruch 1 oder 2, **dadurch gekennzeichnet, dass** der Materialdetektor (24) Vibrationen des Staubabsaugmoduls (2) oder Vibrationen der Handwerkzeugmaschine (1), in welcher das meißelnde Werkzeug (5) eingesetzt ist, durch einen Vibrationssensor (25) erfasst und eine Auswertungseinheit (26) basierend auf den Vibrationen das Material (M2) ermittelt.

4. Steuerungsverfahren nach Anspruch 3, **dadurch gekennzeichnet, dass** eine Vibration oberhalb eines Schwellwerts einem eisenhaltigen Material (M2) und eine Vibration unterhalb des Schwellwerts einem mineralischen Material (M1) zugeordnet wird.

5. Steuerungsverfahren nach einem der vorhergehenden Ansprüche, **dadurch gekennzeichnet, dass** die Auswertungseinheit (26) ein dem Material (M) zugeordnetes Stellsignal an eine Lüftersteuerung (23) des Lüfters (18) übermittelt und die Lüftersteuerung (23) eine Drehzahl des Lüfters (18) ansprechend auf das Stellsignal bei einem eisenhaltigen Material (M2) gegenüber einem mineralischen Material (M1) absenkt.

6. Steuerungsverfahren nach einem der vorhergehenden Ansprüche, **gekennzeichnet durch** ein Erfassen einer Aktivität einer auf das Werkzeug (5) Schläge ausübenden Handwerkzeugmaschine (1) und wobei ansprechend auf die Aktivität der Handwerkzeugmaschine (1) der Luftstrom (Q) angesaugt wird.

7. Steuerungsverfahren für eine meißelnde Handwerkzeugmaschine (1) mit einem Staubabsaugmodul (2) mit den Schritten:
periodisches Ausüben von Schlägen auf ein in einem Werkzeughalter (3) der Handwerkzeugmaschine (1) gehaltertes Werkzeug (5) zum Bearbeiten einer Stelle eines Untergrunds (31),
Absaugen eines Luftstroms (Q) von der durch das Werkzeug (5) bearbeiteten Stelle des Untergrunds (31) mittels eines Lüfters (18) des Staubabsaugmoduls (2),
Ermitteln eines Materials (M) an der von dem Werkzeug (5) bearbeiteten Stelle durch einen Materialdetektor (24) und
Anpassen einer Saugleistung des Staubabsaugmodul (2) in Abhängigkeit des ermittelten Materials (M) zum Einstellen des Luftstroms (Q), wobei bei einem eisenfreien,
mineralischen Material (M1) der Luftstrom (Q) größer oder gleich einem Nennwert (Qo) ist und wobei bei einem eisenhaltigen Material (M2) der Luftstrom (Q) geringer als der Nennwert (Qo) ist, wobei bei mineralischen Material (M1) und bei eisenhaltigen Material (M2) die Schläge auf das Werkzeug (5) ausgeübt werden.

8. Steuerungsverfahren nach Anspruch 7, **dadurch gekennzeichnet, dass** eine Schlagleistung der Handwerkzeugmaschine (1) bei dem eisenhaltigen Material (M2) um weniger als 20 % von einer Schlagleistung bei dem mineralischen Material (M1) verschieden ist.

9. Steuerungsverfahren nach Anspruch 7 oder 8, **dadurch gekennzeichnet, dass** das Staubabsaugmodul (2) mit dem Beginn des periodischen Ausübens von Schlägen eingeschaltet wird.

10. Staubabsaugmodul für eine meißelnde Handwerkzeugmaschine (1) mit einem Werkzeug (5) mit einem Lüfter (18) zum Ansaugen eines Luftstroms (Q) von einer durch das Werkzeug (5) bearbeiteten Stelle eines Untergrunds (31), einem Staubfilter (17), einem Staubsammelbehälter (16), **gekennzeichnet durch**
einen Materialdetektor (24) zum Ermitteln eines Materials (M) an der von dem Werkzeug (5) bearbeiteten Stelle und eine Lüftersteuerung (23), welche zum Einstellen des Luftstroms (Q) eine Saugleistung des Staubabsaugmodul (2) in Abhängigkeit des ermittelten Materials (M) anpasst, wobei bei einem eisenfreien, mineralischen Material (M1) der Luftstrom (Q) größer oder gleich einem Nennwert (Qo) ist und wobei bei einem eisenhaltigen Material (M2) der Luftstrom (Q) geringer als der Nennwert (Qo) ist.

11. Handwerkzeugmaschine (1) mit
einen Werkzeughalter (3) zum Haltern eines Werkzeugs,
einem Elektromotor (9)
einem von dem Elektromotor (9) angetriebenes Schlagwerk (6) zum periodischen Ausüben von Schlägen auf das Werkzeug (5) und
einem Staubabsaugmodul (2) nach Anspruch 10.

## Claims

1. Control method for a dust extraction module (2) for a handheld chiselling power tool (1) into which a chiselling tool (5) has been inserted, comprising the steps of:
drawing in an air flow (Q) from a location, machined by the tool (5), of a substrate (31) by means of a fan (18) of the dust extraction module (2),
**characterized by**
determining a material (M) at the location, machined by the tool (5), using a material detector (24), and
adapting a suction power of the dust extraction module (2) depending on the determined material (M) in order to set the air flow (Q), wherein the air flow (Q) is greater than or equal to a nominal value (Qo) in the case of an iron-free, mineral material (M1) and wherein the air flow (Q) is less than the nominal value (Qo) in the case of an iron-containing material (M2).

2. Control method according to Claim 1, **characterized in that** the air flow (Q) is at most one fifth of the nominal value (Qo) in the case of iron-containing material (M2).

3. Control method according to Claim 1 or 2, **characterized in that** the material detector (24) detects vibrations of the dust extraction module (2) or vibrations of the handheld power tool (1) into which the chiselling tool (5) has been inserted using a vibration sensor (25) and an evaluation unit (26) determines the material (M2) based on the vibrations.

4. Control method according to Claim 3, **characterized in that** a vibration above a threshold value is associated with an iron-containing material (M2) and a vibration below the threshold value is associated with a mineral material (M1).

5. Control method according to one of the preceding claims, **characterized in that** the evaluation unit (26) transmits an actuating signal associated with the material (M) to a fan controller (23) of the fan (18) and the fan controller (23) reduces a rotation speed of the fan (18) in response to the actuating signal in the case of an iron-containing material (M2) as compared to a mineral material (M1).

6. Control method according to one of the preceding claims, **characterized by** detecting activity of a handheld power tool (1) exerting blows onto the tool (5) and wherein the air flow (Q) is drawn in in response to the activity of the handheld power tool (1).

7. Control method for a handheld chiselling power tool (1) having a dust extraction module (2), comprising the steps of:
periodically exerting blows onto a tool (5), held in a tool holder (3) of the handheld power tool (1), for machining a location of a substrate (31),
extracting an air flow (Q) from the location, machined by the tool (5), of the substrate (31) by means of a fan (18) of the dust extraction module (2),
determining a material (M) at the location, machined by the tool (5), using a material detector (24), and
adjusting a suction power of the dust extraction module (2) depending on the determined material (M) for setting the air flow (Q), wherein the air flow (Q) is greater than or equal to a nominal value (Qo) in the case of an iron-free, mineral material (M1), and wherein the air flow (Q) is lower than the nominal value (Qo) in the case of an iron-containing material (M2), wherein the blows are exerted onto the tool (5) in the case of mineral material (M1) and in the case of iron-containing material (M2).

8. Control method according to Claim 7, **characterized in that** a striking power of the handheld power tool (1) in the case of the iron-containing material (M2) is less than 20% different from a striking power in the case of the mineral material (M1).

9. Control method according to Claim 7 or 8, **characterized in that** the dust extraction module (2) is switched on when the periodic exertion of blows begins.

10. Dust extraction module for a handheld chiselling power tool (1) having a tool (5) with a fan (18) for drawing in an air flow (Q) from a location, machined by the tool (5), of a substrate (31), a dust filter (17) and a dust collection container (16), **characterized by** a material detector (24) for determining a material (M) at the location machined by the tool (5) and a fan controller (23) which adjusts a suction power of the dust extraction module (2) depending on the determined material (M) in order to set the air flow (Q), wherein the air flow (Q) is greater than or equal to a nominal value (Qo) in the case of an iron-free, mineral material (M 1), and wherein the air flow (Q) is lower than the nominal value (Qo) in the case of an iron-containing material (M2).

11. Handheld power tool (1) having a tool holder (3) for holding a tool,
an electric motor (9),
a striking mechanism (6), driven by the electric motor (9), for periodically exerting blows onto the tool (5) and
a dust extraction module (2) according to Claim 10.

## Revendications

1. Procédé de commande d'un module d'aspiration de poussières (2) destiné à une machine-outil portative (1) de burinage dans laquelle un outil de burinage (5) est utilisé, comprenant les étapes suivantes :
aspiration d'un débit d'air (Q) d'un emplacement d'un substrat (31) qui est traité par l'outil (5) au moyen d'un ventilateur (18) du module d'aspiration de poussières (2), **caractérisé par**
la détermination d'une matière (M) à l'emplacement traité par l'outil (5) par le biais d'un détecteur de matière (24) et
l'adaptation d'une puissance d'aspiration du module d'aspiration de poussières (2) en fonction de la matière déterminée (M) afin de régler le débit d'air (Q), le débit d'air (Q) étant égal ou supérieur à une valeur nominale (Qo) dans le cas d'une matière minérale non ferrifère (M1) et le débit d'air (Q) étant inférieur à la valeur nominale (Qo) dans le cas d'une matière ferrifère (M2).

2. Procédé de commande selon la revendication 1, **caractérisé en ce que**, dans le cas de la matière ferrifère (M2), le débit d'air (Q) est au maximum égal à un cinquième de la valeur nominale (Qo).

3. Procédé de commande selon la revendication 1 ou 2, **caractérisé en ce que** le détecteur de matière (24) détecte des vibrations du module d'aspiration de poussières (2) ou des vibrations d'une machine-outil portative (1) dans laquelle l'outil de burinage (5) est utilisé, par le biais d'un capteur de vibrations (25) et une unité d'évaluation (26) détermine la matière (M2) sur la base des vibrations.

4. Procédé de commande selon la revendication 3, **caractérisé en ce qu'**une vibration supérieure à une valeur de seuil est associée à une matière ferrifère (M2) et une vibration inférieure à la valeur de seuil est associée à une matière minérale (M1).

5. Procédé de commande selon l'une des revendications précédentes, **caractérisé en ce que** l'unité d'évaluation (26) communique un signal de réglage, associé à la matière (M), à une commande de ventilateur (23) du ventilateur (18) et la commande de ventilateur (23) diminue une vitesse de rotation du ventilateur (18) en réponse au signal de réglage dans le cas d'une matière ferrifère (M2) par rapport à une matière minérale (M1).

6. Procédé de commande selon l'une des revendications précédentes, **caractérisé par** une détection d'une activité d'une machine-outil portative (1) exerçant des impacts sur l'outil (5) et le débit d'air (Q) étant aspiré en réponse à l'activité de la machine-outil portative (1).

7. Procédé de commande d'une machine-outil portative (1) de burinage comprenant un module d'aspiration de poussières (2), comprenant les étapes suivantes :
exercice périodique d'impacts sur un outil (5) maintenu dans un porte-outil (3) de la machine-outil portative (1) en vue de traiter un emplacement d'un substrat (31),
aspiration d'un débit d'air (Q) de l'emplacement du substrat (31) traité par l'outil (5) au moyen d'un ventilateur (18) du module d'aspiration de poussières (2),
détermination d'une matière (M) à l'emplacement traité par l'outil (5) par le biais d'un détecteur de matière (24) et
adaptation d'une puissance d'aspiration du module d'aspiration de poussières (2) en fonction de la matière (M) déterminée afin de régler le débit d'air (Q), le débit d'air (Q) étant égal ou supérieur à une valeur nominale (Qo) dans le cas d'une matière minérale non ferrifère (M1) et le débit d'air (Q) étant inférieur à la valeur nominale (Qo) dans le cas d'une matière ferrifère (M2), les impacts étant exercés sur l'outil (5) dans le cas d'une matière minérale (M1) et d'une matière ferrifère (M2).

8. Procédé de commande selon la revendication 7, **caractérisé en ce qu'**une puissance d'impact de la machine-outil portative (1) dans le cas d'une matière ferrifère (M2) diffère de moins de 20 % d'une puissance d'impact dans le cas d'une matière minérale (M1).

9. Procédé de commande selon la revendication 7 ou 8, **caractérisé en ce que** le module d'aspiration de poussières (2) est mis en marche au début de l'exercice périodique des impacts.

10. Module d'aspiration de poussières destiné à une machine-outil portative (1) de burinage comprenant un outil (5), comprenant un ventilateur (18) destiné à aspirer un débit d'air (Q) d'un emplacement d'un substrat (31) traité par l'outil (5), un filtre à poussières (17), un récipient collecteur de poussières (16), **caractérisé par** un détecteur de matière (24) destiné à déterminer une matière (M) à l'emplacement traité par l'outil (5) et une commande de ventilateur (23), laquelle adapte une puissance d'aspiration du module d'aspiration de poussières (2) en fonction de la matière (M) déterminée afin de régler le débit d'air (Q), le débit d'air (Q) étant égal ou supérieur à une valeur nominale (Qo) dans le cas d'une matière minérale non ferrifère (M1) et le débit d'air (Q) étant inférieur à la valeur nominale (Qo) dans le cas d'une matière ferrifère (M2).

11. Machine-outil portative (1) comprenant
un porte-outil (3) destiné à maintenir un outil,
un moteur électrique (9),
un mécanisme d'impact (6) entraîné par le moteur électrique (9) et destiné à exercer périodiquement des impacts sur l'outil (5) et
un module d'aspiration de poussières (2) selon la revendication 10.
